(19) Europäisches Patentamt

European Patent Office

Office européen des brevets

(11) **EP 0 703 695 B1**

(12) **EUROPEAN PATENT SPECIFICATION**

(45) Date of publication and mention
of the grant of the patent:
**06.05.2004 Bulletin 2004/19**

(51) Int Cl.7: **H04M 19/00**

(21) Application number: **94202727.7**

(22) Date of filing: **22.09.1994**

(54) **Line impedance synthesis circuit**

Impedanz-Nachbildungsschaltung für Teilnehmerleitung

Circuit pour synthétiser une impédance de ligne

(84) Designated Contracting States:
**BE DE ES FR GB IT NL SE**

(43) Date of publication of application:
**27.03.1996 Bulletin 1996/13**

(73) Proprietor: **STMicroelectronics N.V.**
**1118 BH Schiphol Airport Amsterdam (NL)**
Designated Contracting States:
**BE DE ES FR GB IT NL SE**

(72) Inventors:
• **Sevenhans, Joannes Mathilda Josephus**
**B-2930 Brasschaat (BE)**

• **Sallaerts, Daniel**
**B-3200 Aarschot (BE)**

(74) Representative: **Bird, Ariane et al**
**Bird Goen & Co,**
**Klein Dalenstraat 42A**
**3020 Winksele (BE)**

(56) References cited:
**EP-A- 0 046 588        EP-A- 0 582 439**

• **IEEE JOURNAL OF SOLID-STATE CIRCUITS,**
**vol.SC-21, no.2, April 1986, NEW YORK US pages**
**252 - 258 J.F. PIETERS 'A Monolithic 70-V**
**Subscriber Line Interface Circuit'**

## Description

The present invention relates to a line impedance synthesis circuit for a telecommunication line circuit and which is coupled to line terminals of a telecommunication line and fed from first and second terminals of a voltage supply source.

Such a line impedance synthesis circuit is used to provide an adequate termination impedance for the telecommunication line, i.e. a termination impedance which seen from this telecommunication line has a value prescribed by a national Telecommunications administration and which may thus differ from country to country. A generic line impedance synthesis circuit should therefore allow for an easy modification of the value of the termination impedance.

A line impedance synthesis circuit as described above is already known in the art, e.g. from the published European patent application with publication number EP 0046588 A1. Therein, the telecommunication line is equivalent to a line or loop impedance ZL and the line or loop current IL flowing through it is provided by an output of a feedback loop a feedback path of which includes an amplifier sensing the line current and applying a voltage proportional to the line current to one input of a summing point of the feedback loop. The latter voltage also constitutes an output voltage which may be processed in further parts of the telecommunication line circuit. A voltage vi is furthermore applied to another input of the summing point whose output then provides a voltage which is differentially amplified, the resulting differential voltage being applied across the line impedance ZL via two identical resistors, thus providing the line current IL.

In this way, the voltage vi determines both the line current IL and the impedance

$$Ze = \frac{\frac{Vdiff}{IL} - ZL}{1 + 2 \times A}$$

seen from the telecommunication line, wherein Vdiff is the differential voltage and A is the loop gain. Thus, the value of Ze depends upon the voltage vi via parameters which are not accurately known, Ze thereby being difficult to control.

An object of the present invention is to provide a line impedance synthesis circuit of the above known type, but which allows to easily and efficiently choose the value of the impedance.

According to the invention, this object is achieved due to the fact that said line terminals are coupled to said first and second supply terminals via respective first and second impedance means at least one of which includes a main path of a first transistor circuit shunted by the series connection of a resistance circuit and a main path of a second transistor circuit, control electrodes of said first and second transistor circuits being coupled to a same control output of a control circuit.

In this way, the value of the impedance seen from the telecommunication line is equal to the sum of the impedance values of the respective first and second impedance means. The impedance value of the at least one impedance means is equal to $\frac{R}{1 + RAT}$, wherein R is the resistance value of the resistance circuit and RAT is the ratio of currents flowing through the main paths of the first and second transistor circuits. Since the control electrodes of both the first and second transistor circuits are controlled from the same control output to which a same bias voltage is applied, this ratio RAT only depends on design parameters of these first and second transistor circuits, whereas the absolute value of the currents through the respective main paths is also determined by the value of this same voltage. Thus, by adequately designing the first and second transistor circuits, the value of the impedance seen from the telecommunication line may be easily and efficiently chosen.

Another characteristic feature of the present invention is that said first and second impedance means are alike and controlled by respective first and second said control circuits.

Thus, the impedance value of both the first and the second impedance means may be chosen in the same way, and when chosen equal perfect symmetry is obtained.

A further characteristic feature of the present invention is that each of said impedance means includes a third transistor circuit whose control electrode is coupled via a resistance to said control output of the corresponding one of said first and second control circuits and whose main path is coupled in parallel with said main path of said first or second transistor circuit, said control electrodes of said third transistor circuits of both said first and second impedance means being intercoupled via a capacitance.

In this way, the AC value of the impedance may be chosen different from its DC value. Indeed, for this AC value the above formula holds since, the control electrodes of both third transistor circuits then being biased at a same voltage because of the capacitor, this third transistor circuit is not active for AC line currents. On the other hand, the DC value of the impedance is now equal to $\frac{R}{1 + RAT1 + RAT2}$ when the third transistor circuit is coupled in parallel with the first transistor circuit, i.e. the DC value is then lower than the AC value, and to $\frac{R \times (1 + RAT2)}{1 + RAT1 + RAT2}$ when it is coupled in parallel with the second transistor circuit, i.e. the DC value is then higher than the AC value. Herein, RAT1 is the ratio of the currents flowing through the main paths of the first and second transistor circuits, and RAT2 is the ratio of the currents flowing through the main paths of the third and second transistor circuits.

Still a further characteristic feature of the present invention is that said impedance means includes a switch adapted to connect said main path of said third transistor circuit in parallel either with said main path of said first transistor circuit or with said main path of said second transistor circuit under the control of a switch control signal supplied at a switch control terminal of a switch control circuit.

In this way, the value of the switch control signal determines whether the impedance has a DC value which is higher or lower than its AC value.

Yet a further characteristic feature of the present invention is that it further includes between said first and second supply terminals the series connection of a fourth transistor circuit, a load impedance and a fifth transistor circuit, control electrodes of said fourth and fifth transistor circuits being coupled to said control outputs of said first and second control circuits.

In this way, a current proportional to the current flowing through the main path of the second transistor circuit and therefore proportional to the line current flowing through the telecommunication line, flows through the load impedance, whereby a voltage is generated across this impedance which is proportional to this line current and from which a signal superposed thereon may hence be derived.

An even further characteristic feature of the present invention is that said load impedance includes a double-ended operational amplifier whose positive and negative outputs are coupled via respective feedback resistances to its negative and positive inputs, respectively, which in their turn are coupled via respective load resistances to said fifth and fourth transistor circuits, respectively.

Thereby, the value of the load impedance is equal to the sum of the values of the respective load resistances, and the voltage provided across the outputs of the double-ended operational amplifier is proportional to the current flowing through the fourth and fifth transistor circuits. Indeed, in a first approximation the input voltage of the double-ended operational amplifier may be neglected so that the voltage across the load impedance is divided across the respective load resistances whereby the value of the load impedance is equal to the sum thereof. On the other hand, the input current of the double-ended operational amplifier being negligible in a first approximation, the current flowing through the fourth and fifth transistor circuits also flows through the respective feedback resistors, whereby the voltage across the outputs of the double-ended operational amplifier is equal to the product of this current and the sum of the respective feedback resistors.

A yet other characteristic feature of the present invention is that each of said first, second, third and fourth transistor circuits includes a field effect transistor whose gate electrode constitutes said control electrode coupled to said control output of said control circuit.

Thereby, the value of the current flowing through the transistor circuit is determined by the value of the voltage at the gate of the field effect transistor as provided by the control circuit. Furthermore, no current needs be supplied by this control circuit to the transistor circuit as the field effect transistor does not require an input current.

In a further embodiment of the present invention, said transistor circuit further includes second and third field effect transistors and a current source, the series connection of source-to-drain paths of said first mentioned and second field effect transistors constituting said main path of said transistor circuit, the series connection of a source-to-drain path of said third field effect transistor and said current source being connected between said first/second and second/first supply terminals of said voltage supply source, a gate electrode of said second field effect transistor being coupled to the junction point of said drain-to-source path of said third field effect transistor and said current source, and a gate electrode of said third field effect transistor being coupled to the junction point of said drain-to-source paths of said first and second field effect transistors.

Thus, when the voltage at the control electrode of the transistor circuit changes in the direction of the voltage at the first/second supply terminal, henceforth referred to as first direction, the first field effect transistor becomes less conductive and the voltage at the gate of the third field effect transistor changes in a second direction opposite to the first one. Thereby, the voltage at the gate of the second field effect transistor changes in the first direction so that this second field effect transistor becomes less conductive and the voltage at the gate of the third field effect transistor slightly rises again. Thus, a negative feedback loop is providing resulting in a stable operation.

A still further feature of the present invention is that said transistor circuit further includes a fourth field effect transistor whose source-to-drain path is coupled in parallel to said source-to-drain path of said third field effect transistor and whose gate electrode is coupled to said gate electrode of said first field effect transistor.

Thus, when the voltage supplied by the control circuit at the control electrode of the transistor circuit is such that a current flows through its main path, i.e. that the first and second field effect transistors are conductive, then the fourth field effect transistor is also conductive whereby part of the current provided by the current source flows through this fourth field effect transistor instead of through the third one. The more conductive the first and second field effect transistors become, the more conductive the fourth field effect transistor becomes, so that finally nearly all the current provided by the current source flows therethrough. As a consequence, the voltage at the gate of the second field effect transistor is pulled to the voltage at the first/second supply terminal whereby it becomes less conductive. Thus, the current through the transistor circuit is limited.

In an even further embodiment of the present invention, said transistor circuit further includes a fifth field effect transistor whose source-to-drain path is coupled between said first/second supply terminal of said voltage supply source and said source-to-drain path of said first field effect transistor, and whose gate electrode constitutes a second control electrode of said transistor circuit.

Thus, the voltage supplied to the second control electrode determines the conductivity of the drain-to-source path of the fifth field effect transistor, thereby slightly influencing the current through the main path of the transistor circuit.

In another embodiment of the present invention, the current provided by said current source is controlled by a control signal provided by a current control circuit.

By so controlling the current provided by the current source, the voltage at the gate of the second field effect transistor and thereby the conductivity of its drain-to-source path, is controlled.

A further feature of the present invention is that said impedance means further includes further transistor circuits coupled in parallel to either of said first, second or third transistor circuits and the current of whose current source may be cut off by said control signal.

Thus, the above ratio of the currents flowing through the impedance means, and thereby the impedance seen from the telecommunication line, may be modified by controlling the currents provided by the current sources of the transistor circuits. Indeed, when this current is cut off then the voltage at the gate of the second field effect transistor is pulled in the first direction by the third field effect transistor so that this second field effect transistor is no longer conductive and the transistor circuit is cut off.

In another embodiment of the present invention, said first and second line terminals are further coupled to said second and first supply terminals via like said impedance means.

Thus, the first and second line terminals may, via the impedance means, be connected to either the first and second supply terminals, respectively, or to the second and first supply terminals, respectively, so that a reversely biased operation on the telecommunication line is also possible. Either the connection to the first and second, or the one to the second and first supply terminals must then be disabled by cutting off the current provided by the respective current sources.

Still another characteristic of the present invention is that said first transistor circuit is coupled to a corresponding one of said first and second line terminals via a source-to-drain path of a sixth field effect transistor whose gate electrode is coupled to said first/second supply terminal via a bias voltage source.

In this way, the impedance means may be so designed that the current flowing through the telecommunication line, flows largely via series connection of the sixth field effect transistor and the first transistor circuit. Thus, when this series connection is so designed that the voltage across it falls largely across the sixth field effect transistor, then most of the power dissipated by the impedance means is dissipated in the sixth field effect transistor so that this is the only power component of the line impedance synthesis circuit. As a consequence, the impedance means may be fully integrated except for this sixth field effect transistor.

Yet another characteristic feature of the present invention is that said control circuit includes a comparator circuit a first input of which is coupled to the junction point of said resistance circuit and said main path of said second transistor circuit to a second input of which a correction voltage is applied, and an output of which constitutes said control output of said control circuit.

Thus, the voltage supplied at the control output of the control circuit is such that the voltage at the junction point of the resistance circuit and the second transistor circuit is equal to the correction voltage. Indeed, when the voltage at this junction point is higher than this correction voltage then the voltage at the control output is high whereby the second transistor circuit becomes less/more conductive - less for the impedance means coupled to the first supply terminal, and more for the impedance means coupled to the second supply terminal - and the voltage at the junction point drops. In this way a negative feedback loop and thereby a stable operation is obtained.

A further feature of the present invention is that said comparator circuit includes an operational amplifier.

Thus, a simple implementation of the comparator circuit is given.

An even still further characteristic feature of the present invention is that said control circuit further includes a summing circuit to a first input of which a reactance voltage is applied proportional to the reactance component of said impedance associated to said telecommunication line circuit, to a second input of which a signal voltage proportional to an AC signal on said telecommunication line is applied, to a third input of which a bias voltage providing bias for said impedance means is applied, and an output of which provides said correction voltage.

In this way, the voltage at the junction point between the resistance circuit and the second transistor circuit is equal to the sum of the reactance voltage, the signal voltage and the bias voltage. The reactance voltage being proportional to the reactance component of the impedance, the voltage across the resistance circuit has a part which is proportional to this reactance component whereby the impedance seen from the telecommunication line is proportional to this reactance component. The signal voltage being proportional to the AC signal on the telecommunication line, the voltage across the resistance circuit and thereby the value of the impedance seen from the telecommunication line is independent from this AC signal. The bias voltage provides a bias for the impedance means.

A yet further feature of the present invention is that it further includes the cascaded connection of a high pass filter and a gain circuit inputs of said high pass filter being coupled across said outputs of said load impedance and outputs of said gain circuit providing said reactance voltage.

Thus, the synthesis of the above reactance component is only performed for frequencies above a cut-off frequency of the high pass filter, and its value is determined by the gain of the gain circuit.

Still another feature of the present invention is that said gain circuit includes, coupled across said load impedance via said high pass filter, the series connection of an amplifier section, and a gain resistance and a gain capacitance whose junction point provides said reactance voltage.

Thereby, the reactance voltage is proportional to $\dfrac{1}{1 + s \times RG \times CG}$, where s is the complex Laplace variable, RG is the value of the gain resistor and CG is the value of the gain capacitance. Thus, by appropriately choosing these values, the reactance component of the impedance may be chosen as wanted.

An even other feature of the present invention is that said gain circuit further includes a gain amplifier, between an input and an output of which said gain capacitance is coupled.

In this way, the value CG of the gain capacitance used in the above formula is substantially proportional to the gain provided by the gain amplifier. Indeed, a voltage VC provided at the junction point of the gain resistor and the gain capacitance is amplified by the gain amplifier with its gain AG so that a voltage (1+AG)×VC is provided across the gain capacitor which thus virtually has a value equal to (1+AG)×CG. To be noted that. this effect is comparable to the so-called Miller effect occurring in bipolar transistors.

In yet another embodiment of the present invention, said resistance circuit is constituted by the main path of a seventh field effect transistor whose gate electrode is coupled to a resistance control output of a resistance control circuit.

Thus, the voltage provided at the resistance control output of the resistance control circuit determines the resistance value of the resistance circuit, i.e. of the drain-to-source path of the seventh field effect transistor.

In a still further embodiment of the present invention, said resistance control circuit includes the series connection of second and third resistances between first and second bias terminals, the series connection of a main path of an eighth field effect transistor and a fourth resistance between said first and a third bias terminal, and an operational amplifier whose inputs are coupled to the junction point of said main path of said eighth field effect transistor and said fourth resistance, and to the junction point of said second and third resistances, respectively, and whose output is coupled to a gate electrode of said eighth field effect transistor and constitutes said resistance control output, a bias voltage being applied across said first and second bias terminals, and said second and third bias terminals being biased at a same voltage.

In this way, the seventh field effect transistor is controlled by a same voltage as the eighth field effect transistor so that the resistance values of their respective drain-to-source paths are proportional to each other. This resistance value of the eighth field effect transistor is equal to the ratio of the values of the second and third resistors multiplied by the value of the fourth resistor. Indeed, the second and third bias terminals being biased at the same voltage and the inputs of the operational amplifier being coupled to both mentioned junction points which are thereby kept at substantially the same voltage, the drain-to-source path of the eighth field effect transistor constitutes a branch of a resistive bridge which is comparable to a so-called Wheatstone bridge in balanced condition.

An even further characteristic of the present invention is that said resistance control circuit further includes a fifth resistance between said second and a fourth bias terminal, a main path of a ninth field effect transistor between said third and fourth bias terminals, and a second operational amplifier whose inputs are coupled between said second and third bias terminals and whose output is coupled to a gate electrode of said ninth field effect transistor, a second bias voltage being applied across said first and fourth bias terminals.

In this way, the resistance value of the main path of the eighth/ninth field effect transistor, and therefore of the corresponding seventh field effect transistor, is equal to the product of the ratio of the fourth and third resistors, with the second/fifth resistor.

A still further feature of the present invention is that said supply voltage supplied by said voltage supply source across said first and second supply terminals is at least equal to the sum of said second bias voltage and twice a bias voltage value.

Thus, the supply voltage provides the second bias voltage increased with the bias voltage value needed to provide biasing for the impedance means.

Yet a further characteristic feature of the present invention is that said second and fifth resistances have a same value, that said third resistance is constituted by the series connection of two resistances with a same value and whose junction point is coupled to said second control electrode of said first transistor circuit and to a negative input of a summing circuit, first and second positive inputs of which are coupled to said first and second line terminals, respectively, and an output of which is coupled to said second control electrode of both said second transistor circuits.

Thus, the voltage at the junction point of the two series connected resistors constitutes a reference voltage supplied to the second control electrodes of the first transistor circuit. When the voltage at the first and second line terminals is not centred around this reference voltage then the voltage provided to the second control electrodes of the second transistor circuits is such that the voltage at the first and second line terminals becomes again centred around the reference voltage. Indeed, the voltage supplied to the second control electrodes of the second transistor circuits is equal to the sum of the voltages at the first and second line terminals minus the reference voltage and in an ideal case is thus equal to this reference voltage so that the voltage supplied to the second control electrodes of the second transistor circuits is equal to that supplied to the second control electrodes of the first transistor circuits. However, when the voltage supplied to the second control electrodes of the second transistor circuits is higher than the reference voltage then the second transistor circuits are thus controlled that the symmetry of the voltages at the first and second line terminals around the reference voltage is at least partly reestablished.

A final characteristic feature of the present invention is that said resistance control circuit is implemented as an integrated circuit except for said fourth resistance which, is a precision resistance external to said integrated circuit, and said sixth field effect transistor.

Thus, the resistance value of the resistance circuit may be precisely chosen.

The above mentioned and other objects and features of the invention will become more apparent and the invention itself will be best understood by referring to the following description of an embodiment taken in conjunction with the accompanying drawings wherein :

Fig 1 shows a line impedance synthesis circuit according to the invention for use in a telecommunication line circuit;
Fig 2 represents a transistor circuit K as used in the line impedance synthesis circuit of Fig 1; and
Fig 3 depicts the series connection of a load impedance ZCO and a reactance synthesis circuit SYN used in the line impedance synthesis circuit of Fig 1.

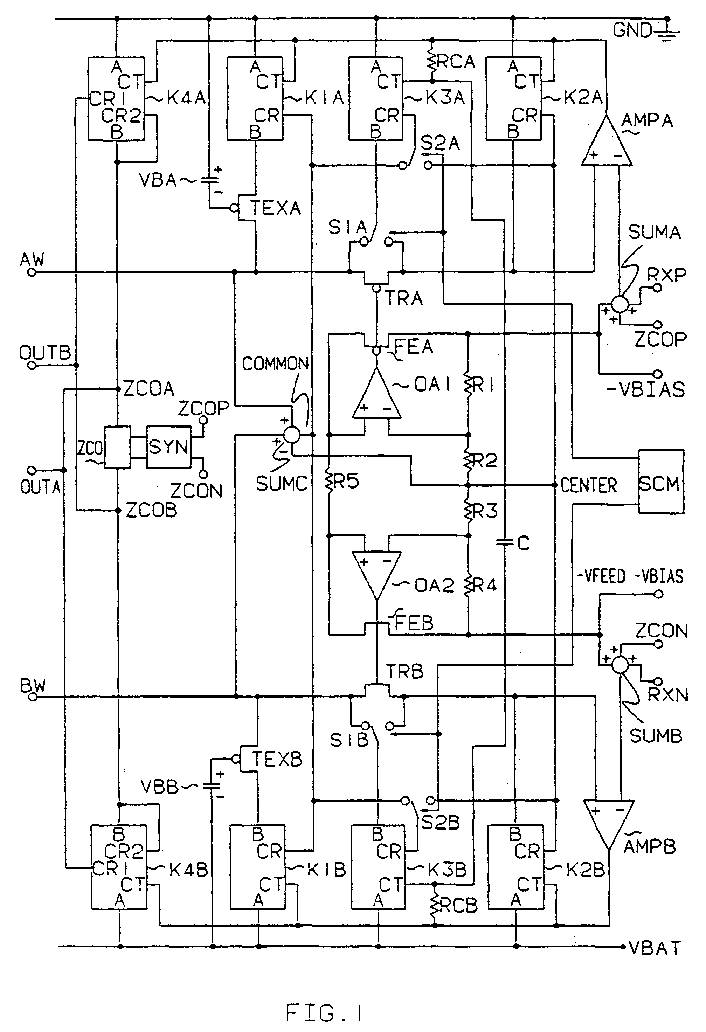

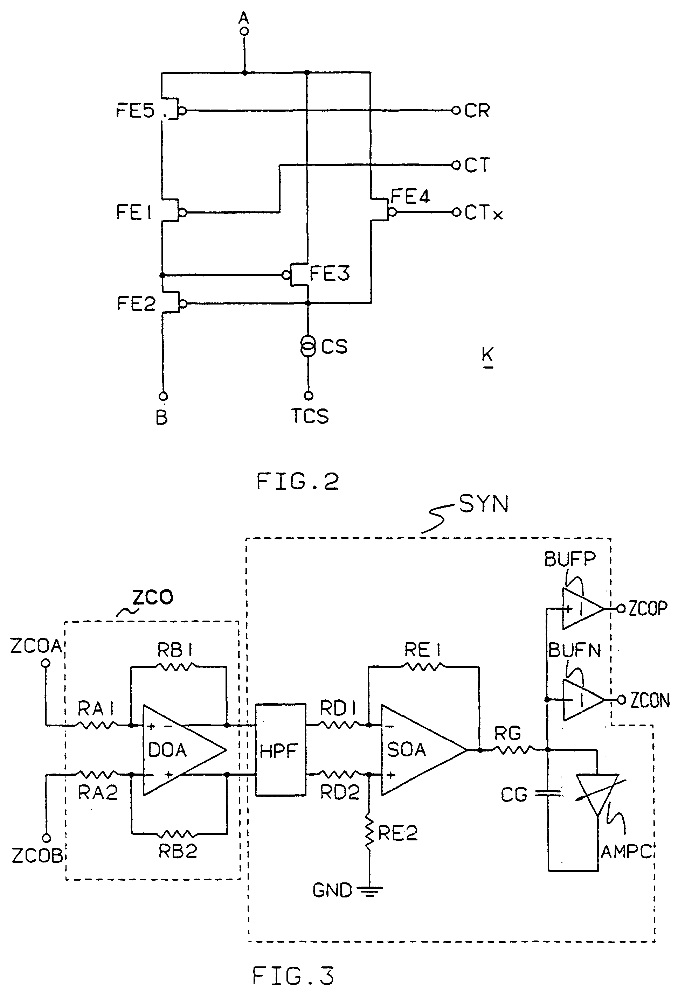

The line impedance synthesis circuit shown in Fig 1 forms part of a telecommunication line circuit interfacing between a two-wire telecommunication line with line terminals AW and BW and a subscriber station (not shown) and provides a matched impedance for the line. It includes between positive first and negative second supply terminals GND and VBAT, respectively, of a voltage supply source, the series connection of a main path AB of a transistor circuit K4A, the load impedance ZCO and a main path BA of a transistor circuit K4B. The junction point between the load impedance ZCO and the transistor circuit K4A is connected to a control electrode CR1 of K4B as well as to a control electrode CR2 of K4A, whereas the junction point between the load impedance ZCO and the transistor circuit K4B is connected to a control electrode CR1 of K4A as well as to a control electrode CR2 of K4B. Outputs of the load impedance ZCO are furthermore connected to inputs of the reactance synthesis circuit SYN which in its turn has outputs providing reactance voltages ZCOP and ZCON as will be described later with reference to Fig 3. The respective junction points between ZCO and on the one hand K4A, on the other hand K4B, constitute respective outputs OUTA or ZCOA and OUTB or ZCOB of the line impedance synthesis circuit.

The line impedance synthesis circuit furthermore includes between supply terminal GND and line terminal AW the series connection of a main path AB of a transistor circuit K1A and a source-to-drain path of a p-channel MOS field effect transistor TEXA whose gate is coupled to a negative pole of a DC bias voltage source VBA a positive pole of which is connected to GND, as well as the series connection of a main path AB of a transistor circuit K2A and a resistance circuit constituted by a source-to-drain path of a p-channel MOS field effect transistor TRA. The junction point of K2A and TRA is connected to a positive input of a comparator circuit constituted by an operational amplifier AMPA whose negative input is connected to an output of a summing circuit SUMA to whose positive inputs a signal voltage RXP, the reactance voltage ZCOP and a bias voltage -VBIAS are applied. An output of the operational amplifier AMPA is connected to control electrodes CT of transistor circuits K1A, K2A and K4A. Further control electrodes CR of K1A and K2A are connected to outputs CENTER and COMMON, respectively, of a resistance control circuit as will be described later.

Likewise, the line impedance synthesis circuit includes between the supply terminal VBAT and line terminal BW the series connection of a main path AB of a transistor circuit K1B and a source-to-drain path of a n-channel MOS field effect transistor TEXB whose gate is coupled to a positive pole of a DC bias voltage source VBB, a negative pole of which is connected to VBAT, as well as the series connection of a main path AB of a transistor circuit K2B and a source-to-drain path of a n-channel MOS field effect transistor TRB. The junction point of K2B and TRB is connected to a positive input of an operational amplifier AMPB whose negative input is connected to an output of a summing circuit SUMB to whose positive inputs a signal voltage RXN, the reactance voltage ZCON and a bias voltage - VFEED - VBIAS are applied. An output of AMPB is connected to control electrodes CT of transistor circuits K1B, K2B and K4B. Control electrodes CR of K1B and K2B are connected to the outputs CENTER and COMMON of the above mentioned resistance control circuit, respectively.

The line impedance synthesis circuit moreover includes a transistor circuit K3A whose main path AB is coupled between the supply terminal GND and a switch S1A via which it may be connected either to the source or to the drain of TRA under the control of a switch control signal supplied at a switch control terminal of a switch control circuit SCM. Likewise, a main path AB of a transistor circuit K3B is coupled between the supply terminal VBAT and a switch S1B via which it may be connected either to the source or to the drain of TRB under the control of a second switch control signal supplied by SCM. Control electrodes CT of K3A and K3B are coupled to the output of AMPA and AMPB via resistors RCA and RCB, respectively, and are intercoupled via a capacitor C. Control electrodes CR of K3A and K3B are via switches S2A and S2B, respectively, coupled either to the output COMMON of the resistance control circuit or to the output CENTER thereof under the control of the above second switch control signal supplied by SCM.

The resistance control circuit includes between bias terminals -VBIAS and -VFEED - VBIAS, respectively, to which the above like named bias voltages are supplied, the series connection of resistors R1, R2, R3 and R4, and the series connection of a source-to-drain path of a p-channel MOS field effect transistor FEA, a resistor R5 and a drain-to-source path of a n-channel MOS field effect transistor FEB. It further includes an operational amplifier OA1 whose positive input is connected to the drain electrode of FEA, whose negative input is connected to the junction point of R1 and R2, and whose output is connected to the gate of FEA as well as the gate of TRA, and an operational amplifier OA2 whose positive input is connected to the drain electrode of FEB, whose negative input is connected to the junction point of R3 and R4, and whose output is connected to the gate of FEB as well as the gate of TRB. The junction point of R2 and R3 constitutes the output CENTER connected to the control electrodes CR of K2A and K2B as mentioned above, and also to a negative input of a summing circuit SUMC whose positive inputs are connected to the line terminals AW and BW, respectively, and whose output constitutes the output COMMON of the resistance control circuit.

Each of the transistor circuits K1A, K2A, K3A and K4A is of the same type as the transistor circuit K shown in Fig 2. It includes between terminals A and B the series connection of source-to-drain paths of p-channel MOS field effect transistors FE5, FE1 and FE2, and between terminal A and a terminal TCS the parallel connection of source-to-drain paths of p-channel MOS field effect transistors FE3 and FE4 in series with a current source CS. The gate electrode of FE2 is connected to the drain electrode of FE3, whereas the gate electrode of FE3 is connected to the drain electrode of FE1. The gate electrode of FE1 constitutes the control electrode CT of K whereas the gate electrode of FE4 constitutes a control electrode CTx of K. The latter control electrode CTx is connected to the junction point of resistor RCA and capacitor C shown in Fig 1, this connection being not shown in either of Figs 1 or 2 so as not to overload these Figures. The gate electrode of FE5 constitutes the control electrode CR of K. The terminal TCS is connected to the supply terminal VBAT which is not shown in Fig 1.

The transistor circuit K4A includes a further p-channel MOS field effect transistor (not shown) whose source-to-drain path is connected in parallel to that of FE5. The gate electrodes of this not shown transistor and of FE5 constitute the respective control electrodes CR1 and CR2 of K4A.

To be noted that transistor circuits K1B, K2B, K3B and K4B are similarly built from n-channel MOS fields effect transistors. In this case the terminal TCS is connected to the supply terminal GND and the terminal CTx is connected to the junction point of RCB and capacitor C.

The load impedance ZCO shown in Fig 3 includes a double-ended operational amplifier DOA whose positive input is coupled to the transistor circuit K4A via a load resistor RA1, and to its negative output via a feedback resistor RB1. Likewise, a negative input of DOA is coupled to the transistor circuit K4B via a load resistor RA2, and to its positive output via a feedback resistor RB2.

The outputs of DOA are furthermore connected to the reactance synthesis circuit SYN also shown in Fig 3 and including the series connection of high pass filter HPF and a gain circuit. This gain circuit includes an operational amplifier SOA whose positive input is coupled to an output of HPF via a resistor RD2, and to supply terminal GND via a resistor RE2. A negative input of SOA is furthermore coupled to a second output of HPF via a resistor RD1, and to its output via a resistor RE1. The output of SOA is coupled to a gain resistor RG in series with the parallel connection of a gain capacitor CG and a gain amplifier AMPC. The junction point of RG and CG is connected to inputs of positive and negative unity gain amplifiers BUFP and BUFN, respectively, whose outputs constitute output terminals ZCOP and ZCON, respectively, providing the above like named reactance voltages.

It should be noted that the line impedance synthesis circuit is implemented as an integrated circuit except for transistors TEXA and TEXB and resistor R5, whereby respective transistor parameters, e.g. the hole and electron mobilities μn and μp, respectively, and gate oxide capacitance Cox, are assumed to be the same for all transistors used.

The operation of the line impedance synthesis circuit is now described hereinafter.

As already mentioned, the line impedance synthesis circuit is used in a telecommunication line circuit interfacing between the two-wire telecommunications line and a subscriber unit, and provides a matched impedance for this line. The telecommunication line being part of a national telephone system, the value to be provided for this matched impedance is prescribed by the respective national Telecommunications administration exploiting the telephone system. This prescribed value has a DC and an AC component. The DC component measured without an AC signal present on the telecommunication line is the so-called feed resistance Rfeed, and the AC component, which is the value for an AC signal on the telecommunication line with a frequency spectrum extending from approximately 300 Hz on upwards, has a resistive component RZCO and a reactive component XZCO.

As follows from Fig 1, the impedance seen from the telecommunication line connected to line terminals AW and BW has a first component between line terminal AW and supply terminal GND which is due to transistor circuits K1A, K2A, K3A and transistor TRA, and a second component between line terminal BW and supply terminal VBAT which is due to transistor circuits K1B, K2B, K3B and transistor TRB. For the subsequently following derivation of formulas for the respective above components Rfeed, RZCO and XZCO of the impedance, these transistor circuits are assumed to be operating as field effect transistors, i.e. the effects incurred by transistors FE2, FE3, FE4 and FE5 are initially neglected but will be described later.

In DC, i.e. for calculating Rfeed, the above first component of the impedance is caused by K1A, K2A, K3A and TRA. Without taking the effect of K3A into account, Rfeed may be calculated as follows. The resistance value RTRA of the source-to-drain path of TRA, which is assumed to be operating in triode region, depends largely on its gate-to-source voltage VGS and only slightly on its drain-to-source voltage VDS, and is given by:

$$RTRA = \frac{1}{\mu p \times Cox \times \frac{W}{L}} \left( VGS - VT - \frac{VDS}{2} \right)^{-1}$$

Herein, $\mu p$ is the mobility of holes in the channel, i.e. the drain-to-source path, of TRA, Cox is the capacitance value of the gate oxide of TRA, $\frac{W}{L}$ is the width-to-length ratio of the channel of TRA, and VT is the so-called threshold voltage of TRA.

Since the voltages between the control electrodes CT and terminals A of K1A and K2A are the same, both K1A and K2A being assumed to operate in their saturation region, the ratio of the currents through the main paths AB of K1A and K2A is equal to the ratio of their $\frac{W}{L}$ ratios. Hence, when a current I flows through the main path AB of K2A, a current

$$I \times \frac{WL1}{WL2}$$

flows through the main path AB of K1A, wherein WL1 is the $\frac{W}{L}$ ratio of K1A, whereas WL2 is the $\frac{W}{L}$ ratio of K2A. Hence,

$$Rfeed = RTRA \times \frac{WL2}{WL1+WL2}.$$

To be noted that this formula gives a first approximation wherein the effect of a voltage drop over the main path AB of K2A is neglected. A more exact formula is the following one which also takes the effect of K3A into account.

$$Rfeed = \frac{VAW - GND}{\left(1 + \frac{WL1}{WL2} + \frac{WL3}{WL2}\right) \times I}$$

$$= \frac{WL2}{WL1 + WL2 + WL3} \left[ R \times \left\{ \begin{array}{c} \frac{WL2 + WL3}{WL2} \\ 1 \end{array} \right\} + \left( \frac{\alpha}{I} - \frac{GND}{I} \right) \right]$$

Herein, VAW is the voltage at line terminal AW, GND is the voltage at the like named supply terminal, WL3 is the $\frac{W}{L}$ ratio of K3A, and $\alpha$ is the voltage at the junction point of TRA and K2A, i.e. $\alpha$ = -VBIAS + RXP + ZCOP. Since both RXP and ZCOP constitute AC voltages, $\alpha$ becomes equal to -VBIAS for calculating Rfeed. When K3A is connected to the source of TRA, R is multiplied with the upper factor between the two braces { and }, whereas the lower factor, viz. 1 , applies when K3A is connected to the drain of TRA.

Assuming now that the line impedance synthesis circuit is symmetrical so that a same impedance is seen from line terminal BW to supply terminal VBAT as from AW to GND, then Rfeed is twice the above calculated value.

For AC frequencies higher than the above mentioned 300 Hz, capacitor C short-circuits the control electrodes of K3A and K3B, whereby for the AC components RZCO and XZCO of the impedance both these transistor circuits no longer come into account. The resistive component RZCO may then be simply determined from the above analysis and is given by the following formula wherein a factor 2 is used to also take the impedance from BW to VBAT into account.

$$RZCO = 2 \times \frac{VAW - GND}{(1 + \frac{WL1}{WL2}) \times I} = 2 \times \frac{WL2}{WL1 + WL2}\left[R + \left(\frac{\alpha}{I} - \frac{GND}{I}\right)\right]$$

Herein, $\alpha$ = -VBIAS + RXP + ZCOP. Comparing now the formulas for Rfeed and RZCO, it may be easily verified that when K3A/K3B is connected to the source of TRA/TRB, Rfeed is higher than RZCO, whereas when K3A/K3B is connected to the drain of TRA/TRB, Rfeed is lower than RZCO. Whether K3A/K3B is connected to the source or the drain of TRA/TRB is determined by the switch control signal provided by the switch control circuit SCM.

The reactive part XZCO of the AC component of the impedance is synthesized by way of the voltages ZCOP and ZCON derived from a current flowing through K4A, ZCO and K4B. This current is equal to

$$I \times \frac{WL4}{WL2}$$

, wherein I is the current through K2A and WL4 is the $\frac{W}{L}$ ratio of K4A. This current I flows through the load resistors RA1 and RA2 of DOA, and through its feedback resistors RB1 and RB2. Since the input voltage between the positive and negative input terminals of DOA may be assumed negligibly small, the resistance value between terminals ZCOA and ZCOB is equal to RA1 + RA2, wherein RA1 and RA2 are the values of the respective like named resistors. Assuming $\frac{RB1}{RA1} = \frac{RB2}{RA2}$, wherein RB1 and RB2 are the values of the respective like named resistors, the output voltage of DOA is then equal to $-\frac{RB1}{RA1} \times$ VZCO, wherein VZCO is the voltage across terminals ZCOA and ZCOB of the load impedance ZCO, i.e.

$$VZCO = I \times \frac{WL4}{WL2} \times (RA1 + RA2).$$

The latter voltage is filtered by HPF which has a lower 3dB frequency equal to the already mentioned 300 kHz, and is thereupon applied to SOA via resistors RD1 and RD2. Assuming $\frac{RD1}{RE1} = \frac{RD2}{RE2}$ wherein RD1, RD2, RE1 and RE2 are the values of the respective like named resistors, the voltage at the output of SOA, i.e. across the series connection of RG and CG, is equal to $\frac{RE1}{RD1} \times \frac{RB1}{RA1} \times$ VZCO. Thus, the voltage at the junction point of RG and CG, i.e. the voltages ZCOP and -ZCON, is given by the following formula.

$$ZCOP = I \times \frac{WL4}{WL2} \times (RA1 + RA2) \times \frac{RB1}{RA1} \times \frac{RE1}{RD1} \times \frac{1}{1 + s \times CG' \times RG} = -ZCON$$

Herein, RG is the value of the like named resistor and CG' is the capacitance value between the junction point of RG and CG and supply terminal GND. In the absence of the operational amplifier AMPC this value CG' is equal to CG. However, by amplifying the voltage at the junction point of RG and CG by a factor Aampc and applying the thus amplified voltage to the terminal of CG not connected to RG, CG' becomes equal to (1+Aampc)×CG. To be noted that AMPC should have a low output impedance.

In order to now determine the reactive part XZCO of the AC component of the impedance, the value for ZCOP is introduced in the factor a of the formula for RZCO, which thus provides both the resistive and the reactive parts RZCO and XZCO.

$$RZCO + j \times XZCO = 2 \times \frac{WL2}{WL1 + WL2} \times \left[R + \beta \times \frac{1}{1 + s \times CG' \times RG} + \gamma\right]$$

Herein,

$$\beta = \frac{WL4}{WL2} \times (RA1 + RA2) \times \frac{RB1}{RA1} \times \frac{RE1}{RD1}$$

and

$$\gamma = \frac{RXP}{I} - \frac{VBIAS}{I} - \frac{GND}{I}.$$

Thus, except for y, the AC component of the impedance is equivalent with a resistor with value $2 \times \frac{WL2}{WL1 + WL2} \times R$ in series with the parallel connection of a resistor with a value $2 \times \frac{WL2}{WL1 + WL2} \times \beta$ and a capacitor with a value

$$\frac{CG' \times RG}{2 \times \frac{WL2}{WL1+WL2} \times \beta}.$$

To be noted that this series connection is equivalent to the parallel connection of a resistor with the series connection of another resistor and a capacitor as may be easily verified and as the AC component of the impedance is often prescribed by the national Telecommunications administrations. Thus, a full synthesis of the impedance has been obtained.

It should also be remarked that the bias voltage VBIAS is needed for the operation of the respective transistor circuits, and that hence the supply voltage applied across terminals GND and VBAT must at least be equal to VFEED+2×VBIAS.

The operation of the resistance control circuit is now described and the resistance value RTRA/RTRB of the source-to-drain path of transistor TRA/TRB is calculated.

This resistance control circuit is constituted by a Wheatstone-like bridge wherein the voltages at the junction points of R1 and R2 and of FEA and R5, and the voltages at the junction points of R3 and R4 and of FEB and R5 are kept equal by the operational amplifier OA1 and OA2, respectively. Indeed, when e.g. the voltage at the junction point of FEA and R5 exceeds the voltage at the junction point of R1 and R2, the output voltage of OA1 becomes more positive, whereby the source-to-drain path of FEA becomes less conductive, i.e. its resistance increases, and the voltage at the junction point of FEA and R5 decreases. As a result, $\frac{RFEA}{R1} = \frac{R5}{R2 + R3} = \frac{RFEB}{R4}$, wherein RFEA and RFEB are the resistance values of the source-to-drain paths of transistors FEA and FEB, respectively. Thus, when for resistor R5 a precision resistor is used with an accurate and stable absolute value, then the values of RFEA and RFEB are also accurate and stable when the latter ratio's are accurate and stable, which may be easily obtained when the resistance control circuit is implemented as an integrated circuit.

Since, except for the AC signals RXP/RXN and the reactance voltages ZCOP/ZCON, the gate-to-source voltages VGS of FEA and FEB are equal to those of TRA and TRB, respectively, in a first approximation the resistance values of their respective source-to-drain paths stand in relation as their $\frac{W}{L}$ ratios, more exactly and taking the drain-to-source voltages VDSFEA and VDSTRA of FEA and TRA, respectively, into account, which are however assumed to be small,

$$\frac{RTRA}{RFEA} = \frac{WLFEA}{WLTRA} \times \frac{VGS - VT - \frac{VDSFEA}{2}}{VGS - VT - \frac{VDSTRA}{2}},$$

wherein WLFEA and WLTRA are the $\frac{W}{L}$ ratios of FEA and TRA, respectively, VT is the threshold voltage of TRA and of FEA which is assumed to be the same.

As a result,

$$RTRA = \frac{WLFEA}{WLTRA} \times \frac{R1 \times R5}{R2 + R3}.$$

To be noted that this value RTRA may be electronically modified for instance by connecting further transistors in parallel to FEA or TRA thereby changing the respective $\frac{W}{L}$ ratio.

The resistance control circuit furthermore provides at the output CENTER a like named voltage which, R1 + R2 being assumed to be equal to R3 + R4, is equal to $-\frac{VFEED}{2}$ - VBIAS, and constitutes a reference voltage around which the voltages VA and VB at the line terminals AW and BW, respectively, should be centered. At the output COMMON the like named voltage equal to VA+VB-CENTER is supplied. Thus; when VA and VB are centered around CENTER, COMMON is equal to CENTER. These voltages COMMON and CENTER are applied to transistor circuits K1A, K2A, K3A, K1B, K2B and K3B as described above and cause the voltages VA and VB to be centered around CENTER. This will become clear from the following operation of these transistor circuits.

Not considering in a first instance the effects of transistors FE4 and FE5, a voltage VCT applied between control electrode CT and terminal A is assumed to have such a value that the source-to-gate voltage -VGS of FE1 is larger than the absolute value of its threshold voltage but smaller than the sum of its source-to-drain voltage and this absolute value, i.e. that FE1 operates in saturation. As a consequence, when the current source CS provides a current to the source-to-drain path of FE3, then a current flows through the source-to-drain paths of FE1 and FE2 which is equal to

$$\frac{\mu p \times Cox \times W}{2 \times L}(VGS - VT)^2.$$

Indeed, the gate of FE1 being biased by VCT, its source-to-drain path becomes conductive whereby the voltage at its drain rises, i.e. is pulled towards the voltage at terminal A. Thereby, since the current provided by CS causes the voltage at the drain of FE3 to decrease, FE2 becomes conductive whereby the voltage at its source reaches a value low enough to ensure the source-to-drain path of FE3 to become conductive in order to provide a path for the current of CS to GND. On the other hand, when CS no longer provides a current then, FE3 still being conductive, the voltage at its drain is pulled towards the voltage at terminal A, whereby FE2 is no longer conductive and the current through the main path AB of the transistor circuit K is cut off. In this way, the transistor circuit K may be made active or inactive by controlling the current provided by the current source CS, so that the $\frac{W}{L}$ ratio of either of the transistor circuits K1A to K4B may be modified by connecting several such transistor circuits in parallel and selectively making them active or inactive.

In a similar way, FE4 ensures that the DC part of the current flowing through the main path AB of K does not exceed a predetermined threshold value due to too high an absolute value of the control voltage applied between CTx and A. Indeed, the higher this absolute value, the larger part of the current provided by CS flows to terminal A via the drain-to-source path of FE4. Thereby, the voltage at the drain of FE3 rises and finally becomes so high that FE2 is no longer conductive and the current through the main path AB of K is cut off. Thus, a DC current limitation is obtained by means of transistor FE4.

Transistor FE5 is assumed to operate in its triode region, i.e. the voltage applied between terminal A and the second control electrode CR is assumed to be larger than the absolute value of the threshold voltage of FE5 and larger than the sum of its source-to-drain voltage and this absolute value. Thus, the source-to-drain path of FE5 constitutes a resistance with a value given by a formula similar to the one already given for RTRA and which increases with increasing value of the voltage at CR, i.e. with decreasing absolute value of the voltage applied between A and CR.

In this way the voltages CENTER and COMMON provided by the resistance control circuit lead to an improved centering of the voltages VA and VB at line terminals AW and BW around CENTER. Indeed, when for instance VA + VB is larger than twice CENTER, then COMMON is larger than CENTER so that the resistance value of the source-to-drain path of FE5 of transistor circuit K1A is larger than that of transistor circuit K2A, whereas the resistance value of the source-to-drain path of FE5 of transistor circuit K1B is lower than that of transistor circuit K2B. As a consequence, the currents flowing through the main paths AB of K1A and K3A decrease slightly, thus causing the part of the impedance seen from AW to GND to increase and the voltage at line terminal AW to decrease, whereas the current flowing through the main path AB of K1B increases slightly, thus causing the part of the impedance seen from BW to VBAT to decrease and the voltage at line terminal BW to decrease. Hence, VA + VB decreases and VA and VB become centered around CENTER. To be noted that a similar reasoning applies when VA + VB is lower than twice CENTER. To be noted also that for DC signals the current flowing through K3A/K3B should be added to either that flowing through K1A/K1B or that flowing through K2A/K2B depending on to which side of transistor TRA/TRB it is connected, which however does not alter the above reasoning.

The voltages VOUTA and VOUTB at the output terminals OUTA and OUTB, respectively, being applied to the respective control electrodes CR1 and CR2 of K4A and K4B has the effect of centering VOUTA and VOUTB around CENTER. Indeed, when VOUTA + VOUTB increases above CENTER then the resistance value of the source-to-drain paths of FES and the above mentioned not shown transistor of K4A increases whereas that of K4B decreases, whereby VOUTA + VOUTB decreases again and VOUTA and VOUTB are centered around CENTER.

To be noted that VOUTA and VOUTB constitute output voltages of the circuit which may be further processed and from which the signal voltages RXP and RXN may easily be derived.

It should also be noted that the current flowing through the telecommunication line largely flows through TEXA and K1A on the one hand, and through TEXB and K1B on the other hand, and that, when designed properly, the power dissipation which is due to this current and voltage standing between AW and GND, and between BW and VBAT, occurs for the largest part in TEXA and TEXB. Therefore, these transistors TEXA and TEXB are implemented as external power components, so that as a result the whole line impedance synthesis circuit may be integrated except for TEXA, TEXB and the precision resistor R5.

The line impedance synthesis circuit may further include a similar circuit as depicted in Fig 1 but wherein AW is connected to VBAT and BW to via respective impedance means, whereby a reverse operation on the telecommunication line may be obtained. One of the two circuits as depicted in Fig 1 must then be disabled by cutting off the current provided by the current sources CS of the respective transistor circuit. To be noted that a same load impedance ZCO and a same resistance control circuit may be used for both the latter similar circuits.

While the principles of the invention have been described above in connection with specific apparatus, it is to be clearly understood that this description is made only by way of example and not as a limitation on the scope of the invention.

**Claims**

1. Line impedance synthesis circuit for a telecommunication line circuit and which is coupled to line terminals (AW, BW) of a telecommunication line and fed from first (GND) and second (VBAT) terminals of a voltage supply source, **characterized in that** said line terminals (AW,BW) are coupled to said first (GND) and second (VBAT) supply terminals via respective first and second impedance means at least one of which includes a main path (A-B) of a first transistor circuit (K1A/K1B) shunted by the series connection of a resistance circuit (TRA/TRB) and a main path (A-B) of a second transistor circuit (K2A/K2B), control electrodes (CT) of said first (K1A/K1B) and second (K2A/K2B) transistor circuits being coupled to a same control output of a control circuit (AMPA,SUMA/AMPB, SUMB).

2. Line impedance synthesis circuit according to claim 1, wherein said first and second impedance means are alike and controlled by respective first (AMPA,SUMA) and second (AMPB,SUMB) control circuits.

3. Line impedance synthesis circuit according to claim 2, wherein each of said impedance means includes a third transistor circuit (K3A/K3B) whose control electrode (CT) is coupled via a resistance (RCA/RCB) to said control output of the corresponding one of said first and second control circuits (AMPA,SUMA/AMPB,SUMB), and whose main path (A-B) is coupled in parallel with said main path (A-B) of said first (K1A/K2A) or second (K1B/K2B) transistor circuit, said control electrodes (CT) of said third transistor circuits (K3A,K3B) of both said first and second impedance means being intercoupled via a capacitance (C).

4. Line impedance synthesis circuit according to claim 3, wherein said impedance means includes a switch (S1A/S1B) adapted to connect said main path of said third transistor circuit (K3A/K3B) in parallel either with said main path of said first transistor circuit (K1A/K1B) or with said main path of said second transistor circuit (K2A/K2B) under the control of a switch control signal supplied at a switch control terminal of a switch control circuit (SCM).

5. Line impedance synthesis circuit according to claim 2, further comprising between said first (GND) and second (VBAT) supply terminals the series connection of a fourth transistor circuit (K4A), a load impedance (ZCO) and a fifth transistor circuit (K4B), control electrodes (CT) of said fourth (K4A) and fifth (K4B) transistor circuits being coupled to said control outputs of said first and second control circuits (AMPA,SUMA/AMPB,SUMB).

6. Line impedance synthesis circuit according to claim 5, wherein said load impedance (ZCO) includes a double-ended operational amplifier (DOA) whose positive and negative outputs are coupled via respective feedback resistances (RB1,RB2) to its negative and positive inputs, respectively, which in their turn are coupled via respective load resistances (RA1,RA2) to said fifth (K4B) and fourth (K4A) transistor circuits, respectively.

7. Line impedance synthesis circuit according to either of claims 1, 2, 3 or 5, wherein each of said first, second, third and fourth transistor circuits (K;K1A,K2A,K3A,K4A/K1B,K2B,K3B,K4B) includes a field effect transistor (FE1) whose gate electrode constitutes said control electrode (CT) coupled to said control output of said control circuit (AMPA,SUMA/AMPB,SUMB).

**8.** Line impedance synthesis circuit according to claim 7, wherein said transistor circuit (K) further includes second (FE2) and third (FE3) field effect transistors and a current source (CS), the series connection of source-to-drain paths of said first mentioned (FE1) and second (FE2) field effect transistors constituting said main path of said transistor circuit (K), the series connection of a source-to-drain path of said third field effect transistor (FE3) and said current source (CS) being connected between said first/second (GND/VBAT) and second/first (VBAT/GND) supply terminals of said voltage supply source, a gate electrode of said second field effect transistor (FE2) being coupled to the junction point of said drain-to-source path of said third field effect transistor (FE3) and said current source (CS), and a gate electrode of said third field effect transistor (FE3) being coupled to the junction point of said drain-to-source paths of said first (FE1) and second (FE2) field effect transistors.

**9.** Line impedance synthesis circuit according to claim 8, wherein said transistor circuit (K) further includes a fourth field effect transistor (FE4) whose source-to-drain path is coupled in parallel to said source-to-drain path of said third field effect transistor (FE3) and whose gate electrode is coupled to said gate electrode of said first field effect transistor (FE1).

**10.** Line impedance synthesis circuit according to claim 8, wherein said transistor circuit (K) further includes a fifth field effect transistor (FE5) whose source-to-drain path is coupled between said first/second supply terminal (GND/VBAT) of said voltage supply source and said source-to-drain path of said first field effect transistor (FE1), and whose gate electrode constitutes a second control electrode (CR) of said transistor circuit (K).

**11.** Line impedance synthesis circuit according to claim 8, wherein the current provided by said current source (CS) is controlled by a control signal provided by a current control circuit.

**12.** Line impedance synthesis circuit according to claim 11, wherein said impedance means further includes further transistor circuits coupled in parallel to either of said first (K1A/K1B), second (K2A/K2B) or third (K3A/K3B) transistor circuits and the current of whose current source (CS) may be cut off by said control signal.

**13.** Line impedance synthesis circuit according to claims 2 and 11, wherein said first (AW) and second (BW) line terminals are further coupled to said second (VBAT) and first (GND) supply terminals via like said impedance means.

**14.** Line impedance synthesis circuit according to claim 1, wherein said first transistor circuit (K1A/K1B) is coupled to a corresponding one of said first (AW) and second (BW) line terminals via a source-to-drain path of a sixth field effect transistor (TEXA/TEXB) whose gate electrode is coupled to said first/second supply terminal (GND/VBAT) via a bias voltage source (VBA/VBB).

**15.** Line impedance synthesis circuit according to claim 1, wherein said control circuit (AMPA, SUMA/AMPB,SUMB) includes a comparator circuit (AMPA/AMPB) a first input of which is coupled to the junction point of said resistance circuit (TRA/TRB) and said main path of said second transistor circuit (K2A/K2B), to a second input of which a correction voltage (RXP+ZCOP-VBIAS/RXN+ZCON-VFEED-VBIAS) is applied, and an output of which constitutes said control output of said control circuit (AMPA,SUMA/AMPB,SUMB).

**16.** Line impedance synthesis circuit according to claim 15, wherein said comparator circuit (AMPA/AMPB) includes an operational amplifier.

**17.** Line impedance synthesis circuit according to claim 15, wherein said control circuit (AMPA, SUMA/AMPB,SUMB) further includes a summing circuit (SUMA/SUMB) to a first input of which a reactance voltage (ZCOP/ZCON) is applied proportional to the reactance component of said impedance associated to said telecommunication line circuit, to a second input of which a signal voltage (RXP/RXN) proportional to an AC signal on said telecommunication line is applied, to a third input of which a bias voltage (-VBIAS/-VFEED-VBIAS) providing bias for said impedance means is applied, and an output of which provides said correction voltage (RXP+ZCOP-VBIAS/RXN+ZCON-VFEED-VBIAS).

**18.** Line impedance synthesis circuit according to claims 6 and 17, further comprising the cascaded connection of a high pass filter (HPF) and a gain circuit (RD1,RD2,RE1,RE2,SOA,RG,CG,AMPC,BUFP,BUFN), inputs of said high pass filter (HPF) being coupled across said outputs of said load impedance (ZCO) and outputs of said gain circuit (RD1,RD2,RE1,RE2,SOA,RG,CG,AMPC,BUFP,BUFN) providing said reactance voltage (ZCOP/ZCON).

**19.** Line impedance synthesis circuit according to claim 18, wherein said gain circuit (RD1,RD2, RE1,RE2,SOA,RG, CG,AMPC,BUFP,BUFN) includes, coupled across said load impedance (ZCO) via said high pass filter (HPF), the series connection of an amplifier section (RD1,RD2,RE1, RE2,SOA), and a gain resistance (RG) and a gain capacitance (CG) whose junction point provides said reactance voltage (ZCOP/ZCON).

**20.** Line impedance synthesis circuit according to claim 19, wherein said gain circuit (RD1,RD2, RE1,RE2,SOA,RG, CG,AMPC,BUFP,BUFN) further includes a gain amplifier (AMPC), between an input and an output of which said gain capacitance (CG) is coupled.

**21.** Line impedance synthesis circuit according to claim 1, wherein said resistance circuit (TRA/TRB) is constituted by the main path of a seventh field effect transistor whose gate electrode is coupled to a resistance control output of a resistance control circuit.

**22.** Line impedance synthesis circuit according to claim 21, wherein said resistance control circuit includes the series connection of second (R1/R4) and third (R2,R3) resistances between first (-VBIAS/-VFEED-VBIAS) and second bias terminals, the series connection of a main path of an eighth field effect transistor (FEA/FEB) and a fourth resistance (R5) between said first (-VBIAS/-VFEED-VBIAS) and a third bias terminal, and an operational amplifier (OA1/OA2) whose inputs are coupled to the junction point of said main path of said eighth field effect transistor (FEA/FEB) and said fourth resistance (R5), and to the junction point of said second (R1/R4) and third (R2,R3) resistances, respectively, and whose output is coupled to a gate electrode of said eighth field effect transistor (FEA/ FEB) and constitutes said resistance control output, a bias voltage being applied across said first (-VBIAS/ -VFEED-VBIAS) and second bias terminals, and said second and third bias terminals being biased at a same voltage.

**23.** Line impedance synthesis circuit according to claims 2 and 22, wherein said resistance control circuit further includes a fifth resistance (R4) between said second and a fourth (-VFEED-VBIAS) bias terminal, a main path of a ninth field effect transistor (FEB) between said third and fourth (-VFEED-VBIAS) bias terminals, and a second operational amplifier (OA2) whose inputs are coupled between said second and third bias terminals and whose output is coupled to a gate electrode of said ninth field effect transistor (FEB), a second bias voltage (VFEED) being applied across said first (-VBIAS) and fourth (-VFEED-VBIAS) bias terminals.

**24.** Line impedance synthesis circuit according to claim 23, wherein said supply voltage supplied by said voltage supply source across said first (GND) and second (VBAT) supply terminals is at least equal to the sum of said second bias voltage (VFEED) and twice a bias voltage value (VBIAS).

**25.** Line impedance synthesis circuit according to claims 10 and 24, wherein said second (R1) and fifth (R4) resistances have a same value, that said third resistance (R2,R3) is constituted by the series connection of two resistances with a same value and whose junction point (CENTER) is coupled to said second control electrode (CR) of said first transistor circuit (K1A/K1B) and to a negative input of a summing circuit (SUMC), first and second positive inputs of which are coupled to said first and second line terminals (AW/BW), respectively, and an output (COMMON) of which is coupled to said second control electrode (CR) of both said second transistor circuits (K1A/K1B).

**26.** Line impedance synthesis circuit according to claim 22, wherein said resistance control circuit is implemented as an integrated circuit except for said fourth resistance (R5), which is a precision resistance external to said integrated circuit, and said sixth field effect transistor (TEXA, TEXB).

**27.** Line impedance synthesis circuit according to claim 3, wherein said capacitance (C) presents a negligible impedance for telecommunication speech signals.

**Patentansprüche**

**1.** Leitungsimpedanz-Syntheseschaltung für eine Telekommunikations-Leitungsschaltung, welche mit Leitungsanschlüssen (AW, BW) einer Telekommunikationsleitung gekoppelt ist und von einem ersten Anschluss (GND) einer Versorungsspannungsquelle und einem zweiten Anschluss (VBAT) einer Versorgungsspannungsquelle gespeist wird,
**dadurch gekennzeichnet,**
**dass** die Leitungsanschlüsse (AB, BW) mit einem ersten Versorgungsanschluss (GND) und einem zweiten Versorgungsanschluss (VBAT) mittels jeweils einer ersten Impedanzeinrichtung und einer zweiten Impedanzeinrichtung,
wobei wenigstens eine von diesen Impedanzeinrichtungen einen Hauptpfad (A-B) einer ersten Transistorschaltung (K1A/K1B) parallel geschalten mit einer seriellen Verbindung einer Widerstandsschaltung (TRA/TRB) und eines Hauptpfades (A-B) einer zweiten Transistorschaltung (K2A/K2B) aufweist, gekoppelt sind, Steuerelektroden (CT) einer ersten Transistorschaltung (K1A/K1B) und einer zweiten Transistorschaltung (K2A/K2B) mit einem gleichen Steuerausgang einer Steuerschaltung (AMPA, SUMA/AMPB, SUMB) gekoppelt sind.

2. Leitungsimpedanz-Syntheseschaltung nach Anspruch 1, wobei eine erste und eine zweite Impedanzeinrichtung gleich sind und von einer jeweiligen ersten Steuerschaltung (AMPA, SUMA) und einer zweiten Steuerschaltung (AMPB, SUMB) gesteuert werden.

3. Leitungsimpedanz-Syntheseschaltung nach Anspruch 2, wobei jede der Impedanzeinrichtungen eine dritte Transistorschaltung (K3A/K3B) aufweist, deren Steuerelektrode (CT) mittels eines Widerstandes (RCA/RCB) mit dem Steuerausgang einer Korrespondierenden einer ersten und einer zweiten Steuerschaltung (AMPA, SUMA/AMPB, SUMB) gekoppelt ist, und deren Hauptpfad (A-B) parallel mit dem Hauptpfad (A-B) einer ersten Transistorschaltung (K1A/K2A) oder einer zweiten Transistorschaltung (K1B/K2B) gekoppelt ist, wobei die Steuerelektroden (CT) einer dritten Transistorschaltung (K3A, K3B) von beiden ersten und zweiten Impedanzeinrichtungen mittels einer Kapazität (C) gekoppelt sind.

4. Leitungsimpedanz-Syntheseschaltung nach Anspruch 3, wobei die Impedanzeinrichtung einen Schalter (S1A/S1B) aufweist, welcher unter der Steuerung eines Schaltersteuerungssignals, das von einem Schaltersteuerungsanschluss eines Schaltersteuerungsschaltung (SCM) bereitgestellt wird, welcher eingestellt wird, um den Hauptpfad einer dritten Transistorschaltung (K3A/K3B) entweder mit dem Hauptpfad einer ersten Transistorschaltung (K1A/K1B) oder mit dem Hauptpfad einer zweiten Transistorschaltung (K2A/K2B) parallel zu verbinden.

5. Leitungsimpedanz-Syntheseschaltung nach Anspruch 2, wobei welche weiter zwischen einem ersten Versorgungsanschluss (GND) und einem zweiten Versorgungsanschluss (VBAT) eine serielle Verbindung einer vierten Transistorschaltung (K4A), einer Lastimpedanz (ZCO) und einer fünften Transistorschaltung (K4B) und Steuerelektroden (CT) einer vierten Transistorschaltung (K4A) und einer fünften Transistorschaltung (K4B) gekoppelt mit den Steuerausgängen einer ersten Steuerschaltung und einer zweiten Steuerschaltung (AMPA, SUMA/AMPB, SUMB) aufweist.

6. Leitungsimpedanz-Syntheseschaltung nach Anspruch 5, wobei die Lastimpedanz (ZCO) einen doppel-endenden Operationsverstärker (DOA) aufweist, dessen positive und negative Ausgänge mittels jeweiliger Feedback-Widerstände (RB1, RB2) mit ihren negativen und positiven Eingängen bzw. die wiederum mittels jeweiliger Lastwiderstände (RA1, RA2) mit einer fünften Transistorschaltung (K4B) und einer vierten Transistorschaltung (K4A) gekoppelt sind.

7. Leitungsimpedanz-Syntheseschaltung nach einem der Ansprüche 1, 2, 3 oder 5, wobei jede der ersten, zweiten, dritten und vierten Transistorschaltungen (K; K1A, K2A, K3A, K4A/K1B, K2B, K3B, K4B) einen Feldeffekttransistor (FE1) aufweist, dessen Gate-Elektrode die Steuerelektrode (CT) bildet, welche den Steuerausgang mit der Steuerschaltung (AMPA, SUMA/AMPB, SUMB) koppelt.

8. Leitungsimpedanz-Syntheseschaltung nach Anspruch 7, wobei die Transistorschaltung (K) weiter einen zweiten Feldeffekttransistor (FE2) und einen dritten Feldeffekttransistor (FE3) und eine Stromquelle (CS) aufweist, wobei die serielle Verbindung des Source-to-Drain-Pfades eines ersten Feldeffekttransistors (FE1) und eines zweiten Feldeffekttransistors (FE2) den Hauptpfad der Transistorschaltung (K) ausbilden, wobei eine serielle .Verbindung des Source-to-Drain-Pfades eines dritten Feldeffekttransistors (FE3) und einer Stromquelle (CS), welche zwischen einem ersten/zweiten Versorgungsanschluss der Spannungsversorgungsquelle (GND/VBAT) und einem zweiten/ersten Versorgungsanschluss der Spannungsversorgungsquelle (VBAT/GND) verbunden sind, wobei die Gate-Elektrode eines zweiten Feldeffekttransistors (FE2) mit einem Verbindungsknotenpunkt des Drain-to-Source-Pfades eines dritten Feldeffekttransistors (FE3) und einer Stromquelle (CS) gekoppelt ist, wobei die Gate-Elektrode eines dritten Feldeffekttransistors (FE3) mit einem Verbindungsknotenpunkt des Drain-to-Source-Pfades eines ersten Feldeffekttransistors (FE1) und eines zweiten Feldeffekttransistors (FE2) gekoppelt ist.

9. Leitungsimpedanz-Syntheseschaltung nach Anspruch 8, wobei eine Transistorschaltung (K) weiter einen vierten Feldeffekttransistor (FE4) aufweist, dessen Source-to-Drain-Pfad parallel mit dem Source-to-Drain-Pfad eines dritten Feldeffekttransistors (FE3) und dessen Gate-Elektrode mit der Gate-Elektrode eines ersten Feldeffekttransistors (FE1) gekoppelt ist.

10. Leitungsimpedanz-Syntheseschaltung nach Anspruch 8, wobei eine Transistorschaltung (K) weiter einen fünften Feldeffekttransistor (FE5) aufweist, dessen Source-to-Drain-Pfad zwischen einem ersten/zweiten Versorgungsanschluss (GND/VBAT) einer Spannungsversorgungsquelle und dem Source-to-Drain-Pfad eines ersten Feldeffekttransistors (FE1) gekoppelt ist und dessen Gate-Elektrode eine zweite Steuerelektrode (CR) einer Transistorschaltung (K) bildet.

11. Leitungsimpedanz-Syntheseschaltung nach Anspruch 8, wobei der Strom, bereitgestellt von einer Stromquelle (CS), von einem Steuersignal, das von einer Stromsteuerungsschaltung bereitgestellt wird, gesteuert wird.

12. Leitungsimpedanz-Syntheseschaltung nach Anspruch 11, wobei die Impendanzeinrichtung weiter Transistorschaltungen, die entweder mit der ersten Transistorschaltung (K1A/K1B), der zweiten Transistorschaltung (K2A/K2B) oder mit der dritten Transistorschaltung (K3A/K3B) parallel gekoppelt sind, aufweist und der Strom einer Stromquelle (CS) von einem Steuersignal ausgeschalten werden kann.

13. Leitungsimpedanz-Syntheseschaltung nach Anspruch 2 und 11, wobei der erste Leitungsanschluss (AW) und der zweite Leitungsanschluss (BW) weiter mit einem zweiten Versorgungsanschluss (VBAT) und einem ersten Versorgungsanschluss (GND) mittels einer Impedanzeinrichtung gekoppelt sind.

14. Leitungsimpedanz-Syntheseschaltung nach Anspruch 1, wobei eine erste Transistorschaltung (K1A/K1B) mit einer Korrespondierenden des ersten Leitungsanschlusses (AW) und des zweiten Leitungsanschlusses (BW) mittels eines Source-to-Drain-Pfades eines sechsten Feldeffekttransistors (TEXA/TEXB), dessen Gate-Elektrode mit dem ersten/zweiten Versorgungsanschluss (GND/VBAT) mittels einer Vorspannungsquelle (VBA/VBB) gekoppelt ist.

15. Leitungsimpedanz-Syntheseschaltung nach Anspruch, 1, wobei eine Steuerschaltung (AMPA, SUMA/AMPB, SUMB) eine Komparatorschaltung (AMPA/AMPB) aufweist, wobei deren erster Eingang mit einem Verbindungsknotenpunkt einer Widerstandsschaltung (TRA/TRB) und dem Hauptpfad einer zweiten Transistorschaltung (K2A/K2B) gekoppelt ist und wobei mit einem zweiten Eingang eine Korrekturspannung (RXP+ZCOP-VBIAS/RXN+ZCON-VFEED-VBIAS) bereitgestellt wird und wobei deren Ausgang einen Steuerausgang einer Steuerschaltung (AMPA, SUMA/AMPB, SUMB) ausbildet.

16. Leitungsimpedanz-Syntheseschaltung nach Anspruch 15, wobei die Komparatorschaltung (AMPA/AMPB) einen Operationsverstärker aufweist.

17. Leitungsimpedanz-Syntheseschaltung nach Anspruch 15, wobei eine Steuerschaltung (AMPA, SUMA/AMPB, SUMB) weiter eine Summierschaltung (SUMA/SUMB) aufweist, wobei mit deren ersten Eingang eine Reaktanzspannung (ZCOP/ZCON) proportional zur Reaktanzkomponente der Impedanz, die zur Telekommunikationsleitungsschaltung angeschlossen ist, bereitgestellt wird, wobei mit deren zweiten Eingang eine Signalspannung (RXP/RXN) proportional zu einem AC-Signal auf der Telekommunikationsleitung bereitgestellt wird, wobei mit deren dritten Eingang eine Vorspannung (-VBIAS/-VFEED-VBIAS), welche eine Vorspannung für die Impedanzeinrichtung bereitstellt, bereitgestellt wird, und deren Ausgang eine Korrekturspannung (RXP+ZCOP-VBIAS/RXN+ZCON-VFEED-VBIAS) bereitstellt.

18. Leitungsimpedanz-Syntheseschaltung nach Anspruch 6 und 17, wobei diese weiter eine kaskadierte Verbindung eines Hochpassfilters (HPF) und einer Verstärkungsschaltung (RD1, RD2, RE1, RE2, SOA, RG, CG, AMPC, BUFP, BUFN), aufweist, wobei die Eingänge des Hochpassfilters (HPF) über die Ausgänge der Lastimpedanz (ZCO) gekoppelt sind und die Ausgänge der Verstärkungsschaltung (RD1, RD2, RE1, RE2, SOA, RG, CG, AMPC, BUFP, BUFN) die Reaktanzspannung (ZCOP/ZCON) bereitstellen.

19. Leitungsimpedanz-Syntheseschaltung nach Anspruch 18, wobei eine Verstärkungsschaltung (RD1, RD2, RE1, RE2, SOA, RG, CG, AMPC, BUFP, BUFN), welche über eine Lastimpedanz (ZCO) mittels eines Hochpassfilters (HPF) gekoppelt ist, eine serielle Verbindung eines Verstärkungsteils (RD1, RD2, RE1, RE2, SOA) und eines Verstärkungswiderstandes (RG) und einer Verstärkungskapazität (CG), deren Verbindungsknotenpunkt eine Reaktanzspannung (ZCOP/ZCON) bereitstellt, aufweist.

20. Leitungsimpedanz-Syntheseschaltung nach Anspruch 19, wobei eine Verstärkungsschaltung (RD1, RD2, RE1, RE2, SOA, RG, CG, AMPC, BUFP, BUFN) weiter einen Verstärker (AMPC) aufweist, wobei zwischen dessen Eingang und dessen Ausgang eine Verstärkungskapazität (CG) gekoppelt ist.

21. Leitungsimpedanz-Syntheseschaltung nach Anspruch 1, wobei eine Widerstandsschaltung (TRA/TRB) durch den Hauptpfad eines siebenten Feldeffekttransistors, dessen Gate-Elektrode mit einem Widerstandssteuerungsausgang einer Widerstandssteuerungsschaltung gekoppelt ist, ausgebildet wird.

22. Leitungsimpedanz-Syntheseschaltung nach Anspruch 21, wobei eine Widerstandssteuerungsschaltung eine serielle Verbindung eines zweiten Widerstandes (R1/R4) und eines dritten Widerstandes (R2, R3) zwischen dem ersten Vorspannungsanschluss (-VBIAS/-VFEED-VBIAS) und dem zweiten Vorspannungsterminal, eine serielle Verbindung von einem Hauptpfad eines achten Feldeffekttransistors (FEA/FEB) und eines vierten Widerstandes (R5) zwischen dem ersten Vorspannungsanschluss (-VBIAS/-VFEED-VBIAS) und einem dritten Vorspannungsterminal, einen Operationsverstärker (OA1/OA2), dessen Eingänge mit dem Verbindungsknotenpunkt des Hauptpfades eines achten Feldeffekttransistors (FEA/FEB) und eines vierten Widerstandes (R5) und mit dem Verbindungsknotenpunkt eines zweiten Widerstandes (R1/R4) und eines dritten Widerstandes (R2, R3) und dessen Ausgang mit der Gate-Elektrode eines achten Feldeffekttransistors (FEA/FEB) gekoppelt ist und einen Widerstandssteuerungsausgang ausbildet, eine Vorspannung über einen ersten Vorspannungsanschluss (-VBIAS) und einen zweiten Vorspannungsanschluss (-VFEED-VBIAS) bereitgestellt wird, und einen zweiten und einen dritten Vorspannungsanschluss, die mit derselben Spannung bereitgestellt sind, aufweist.

23. Leitungsimpedanz-Syntheseschaltung nach Anspruch 2 und 22, wobei die Widerstandssteuerungsschaltung weiter einen fünften Widerstand (R4) zwischen einem zweiten und einem vierten Vorspannungsanschluss (-VFEED-VBIAS), einen Hauptpfad eines neunten Feldeffekttransistors (FEB) zwischen einem dritten und einem vierten Vorspannungsanschluss (-VFEED-VBIAS) und einen zweiten Operationsverstärker (OA2), dessen Eingänge zwischen einem zweiten und dritten Vorspannungsanschluss gekoppelt sind und dessen Ausgänge zwischen einer Gate-Elektrode eines neunten Feldeffekttransistors (FEB) und eine zweite Vorspannung (VFEED), die über einen ersten Vorspannungsanschluss (-VBIAS) und einen vierten Vorspannungsanschluss (-VFEED-VBIAS) bereitgestellt wird, aufweist.

24. Leitungsimpedanz-Syntheseschaltung nach Anspruch 23, wobei die Versorgungsspannung, die durch die Versorgungsspannungsquelle über einen ersten Versorgungsanschluss (GND) und einen zweiten Versorgungsanschluss (VBAT) bereitgestellt wird, ist wenigstens gleich der Summe der zweiten Vorspannung (VFEED) und doppelt so groß wie ein Vorspannungswert (VBIAS).

25. Leitungsimpedanz-Syntheseschaltung nach Anspruch 10 und 24, wobei ein zweiter Widerstand (R1) und ein fünfter Widerstand (R4) einen gleichen Wert haben, so dass ein dritter Widerstand (R2, R3) durch die serielle Verbindung von zwei Widerständen mit gleichem Wert ausgebildet wird und dessen Verbindungsknotenpunkt (CENTER) mit einer zweiten Steuerelektrode (CR) einer ersten Transistorschaltung (K1A/K1B) und mit dem negativen Eingang der Summierschaltung (SUMC) gekoppelt ist, wobei der erste und der zweite positive Eingang der Summierschaltung mit den ersten bzw. zweiten Leitungsanschlüssen (AW/BW) gekoppelt sind, und ein Ausgang (COMMON) einer Summierschaltung mit der zweiten Steuerelektrode (CR) von beiden zweiten Transistorschaltungen (K1A/K1B) gekoppelt ist.

26. Leitungsimpedanz-Syntheseschaltung nach Anspruch 22, wobei die Widerstandssteuerungsschaltung, außer einem vierten Widerstand (R5), welcher ein Präzisionswiderstand außerhalb der integrierten Schaltung ist, und einem sechsten Feldeffekttransistor (TEXA, TEXB), in einer integrierten Schaltung implementiert ist.

27. Leitungsimpedanz-Syntheseschaltung nach Anspruch 3, wobei die Kapazität (C) eine geringfügige Impedanz für Telekommunikationssprachsignale aufweist.

## Revendications

1. Circuit de synthèse d'impédance de ligne pour un circuit de ligne de télécommunication et qui est relié à des bornes de ligne (AW, BW) d'une ligne de télécommunication et qui est alimenté à partir de première (GND) et seconde (VBAT) bornes d'une source d'alimentation en tension, **caractérisé en ce que** lesdites bornes de ligne (AW, BW) sont reliées aux dites première (GND) et seconde (VBAT) bornes d'alimentation via des premier et second moyens d'impédance respectifs dont au moins un d'entre eux comprend un chemin principal (A - B) d'un premier circuit de transistor (K1A / K1B) shunté par la connexion en série d'un circuit de résistance (TRA / TRB) et d'un chemin principal (A - B) d'un deuxième circuit de transistor (K2A / K2B), des électrodes de commande (CT) desdits premier (K1A / K1B) et deuxième (K2A / K2B) circuits de transistor étant reliées à une même sortie de commande d'un circuit de commande (AMPA, SUMA / AMPB, SUMB).

2. Circuit de synthèse d'impédance de ligne selon la revendication 1, dans lequel lesdits premier et second moyens d'impédance sont semblables et commandés par des premier (AMPA, SUMA) et second (AMPB, SUMB) circuits de commande respectifs.

3. Circuit de synthèse d'impédance de ligne selon la revendication 2, dans lequel chacun desdits moyens d'impédance comprend un troisième circuit de transistor (K3A / K3B) dont l'électrode de commande (CT) est reliée via une résistance (RCA / RCB) à ladite sortie de commande du circuit correspondant desdits premier et second circuits de commande (AMPA, SUMA / AMPB, SUMB), et dont le chemin principal (A - B) est relié en parallèle audit chemin principal (A - B) dudit premier (K1A / K2A) ou deuxième (K1B / K2B) circuit de transistor, lesdites électrodes de commande (CT) desdits troisièmes circuits de transistor (K3A, K3B) tant dudit premier que dudit second moyen d'impédance étant reliées via une capacité (C).

4. Circuit de synthèse d'impédance de ligne selon la revendication 3, dans lequel ledit moyen d'impédance comprend un commutateur (S1A / S1B) conçu pour relier ledit chemin principal dudit troisième circuit de transistor (K3A / K3B) en parallèle soit audit chemin principal dudit premier circuit de transistor (K1A / K1B) soit audit chemin principal dudit deuxième circuit de transistor (K2A / K2B) sous la commande d'un signal de commande de commutateur fourni au niveau d'une borne de commande de commutateur d'un circuit de commande de commutateur (SCM).

5. Circuit de synthèse d'impédance de ligne selon la revendication 2, comprenant de plus entre lesdites première (GND) et seconde (VBAT) bornes d'alimentation, la connexion en série d'un quatrième circuit de transistor (K4A), d'une impédance de charge (ZCO) et d'un cinquième circuit de transistor (K4B), des électrodes de commande (CT) desdits quatrième (K4A) et cinquième (K4B) circuits de transistor étant reliées auxdites sorties de commande desdits premier et second circuits de commande (AMPA, SUMA / AMPB, SUMB).

6. Circuit de synthèse d'impédance de ligne selon la revendication 5, dans lequel ladite impédance de charge (ZCO) comprend un amplificateur opérationnel à double sortie (DOA) dont les sorties positive et négative sont reliées via des résistances de rétroaction respectives (RB1, RB2) respectivement à ses entrées négative et positive, qui sont à leur tour reliées via des résistances de charge respectives (RA1, RA2) respectivement auxdits cinquième (K4B) et quatrième (K4A) circuits de transistor.

7. Circuit de synthèse d'impédance de ligne selon l'une ou l'autre des revendications 1, 2, 3 ou 5, dans lequel chacun desdits premier, deuxième, troisième et quatrième circuits de transistor (K ; K1A, K2A, K3A, K4A / K1B, K2B, K3B, K4B) comprend un transistor à effet de champ (FE1) dont l'électrode de grille constitue ladite électrode de commande (CT) reliée à ladite sortie de commande dudit circuit de commande (AMPA, SUMA / AMPB, SUMB).

8. Circuit de synthèse d'impédance de ligne selon la revendication 7, dans lequel ledit circuit de transistor (K) comprend de plus des deuxième (FE2) et troisième (FE3) transistors à effet de champ et une source de courant (CS), la connexion en série des chemins source-drain desdits premier (FE1) et deuxième (FE2) transistors à effet de champ mentionnés constituant ledit chemin principal dudit circuit de transistor (K), la connexion en série d'un chemin source-drain dudit troisième transistor à effet de champ (FE3) et de ladite source de courant (CS) étant reliée entre lesdites première / seconde (GND / VBAT) et seconde / première (VBAT / GND) bornes d'alimentation de ladite source d'alimentation en tension, une électrode de grille dudit deuxième transistor à effet de champ (FE2) étant reliée au point de jonction dudit chemin drain-source dudit troisième transistor à effet de champ (FE3) et ladite source de courant (CS), et une électrode de grille dudit troisième transistor à effet de champ (FE3) étant reliée au point de jonction desdits chemins drain-source desdits premier (FE1) et deuxième (FE2) transistors à effet de champ.

9. Circuit de synthèse d'impédance de ligne selon la revendication 8, dans lequel ledit circuit de transistor (K) comprend de plus un quatrième transistor à effet de champ (FE4) dont le chemin source-drain est relié en parallèle audit chemin source-drain dudit troisième transistor à effet de champ (FE3) et dont l'électrode de grille est reliée à ladite électrode de grille dudit premier transistor à effet de champ (FE1).

10. Circuit de synthèse d'impédance de ligne selon la revendication 8, dans lequel ledit circuit de transistor (K) comprend de plus un cinquième transistor à effet de champ (FE5) dont le chemin source-drain est relié entre lesdites première / seconde bornes d'alimentation (GND / VBAT) de ladite source d'alimentation en tension et ledit chemin source-drain dudit premier transistor à effet de champ (FE1), et dont l'électrode de grille constitue une seconde électrode de commande (CR) dudit circuit de transistor (K).

11. Circuit de synthèse d'impédance de ligne selon la revendication 8, dans lequel le courant fourni par ladite source de courant (CS) est commandé par un signal de commande fourni par un circuit de commande de courant.

12. Circuit de synthèse d'impédance de ligne selon la revendication 11, dans lequel ledit moyen d'impédance comprend de plus des circuits de transistor supplémentaires reliés en parallèle à l'un ou l'autre desdits premier (K1A / K1B), deuxième (K2A / K2B) ou troisième (K3A / K3B) circuits de transistor et dont la source de courant (CS) peut être coupée par ledit signal de commande.

13. Circuit de synthèse d'impédance de ligne selon les revendications 2 et 11, dans lequel lesdites première (AW) et seconde (BW) bornes de ligne sont de plus reliées auxdites seconde (VBAT) et première (GND) bornes d'alimentation via lesdits moyens d'impédance semblables.

14. Circuit de synthèse d'impédance de ligne selon la revendication 1, dans lequel ledit premier circuit de transistor (K1A / K1B) est relié à une borne correspondante desdites première (AW) et seconde (BW) bornes de ligne via un chemin source-drain d'un sixième transistor à effet de champ (TEXA / TEXB) dont l'électrode de grille est reliée à ladite première / seconde borne d'alimentation (GND / VBAT) via une source de tension de polarisation (VBA / VBB).

15. Circuit de synthèse d'impédance de ligne selon la revendication 1, dans lequel ledit circuit de commande (AMPA, SUMA / AMPB, SUMB) comprend un circuit comparateur (AMPA / AMPB) dont une première entrée est reliée au point de jonction dudit circuit de résistance (TRA / TRB) et dudit chemin principal dudit deuxième circuit de transistor (K2A / K2B), à une seconde entrée duquel on applique une tension de correction (RXP + ZCOP - VBIAS / RXN + ZCON - VFEED - VBIAS), et dont une sortie constitue ladite sortie de commande dudit circuit de commande (AMPA, SUMA / AMPB, SUMB).

16. Circuit de synthèse d'impédance de ligne selon la revendication 15, dans lequel ledit circuit comparateur (AMPA / AMPB) comprend un amplificateur opérationnel.

17. Circuit de synthèse d'impédance de ligne selon la revendication 15, dans lequel ledit circuit de commande (AMPA, SUMA / AMPB, SUMB) comprend de plus un circuit de sommation (SUMA / SUMB) à une première entrée duquel une tension de réactance (ZCOP / ZCON) proportionnelle à la composante de réactance de ladite impédance associée audit circuit de ligne de télécommunication est appliquée, à une deuxième entrée duquel une tension de signal (RXP / RXN) proportionnelle à un signal AC sur ladite ligne de télécommunication est appliquée, à une troisième entrée duquel une tension de polarisation (- VBIAS / - VFEED - VBIAS) fournissant une polarisation pour ledit moyen d'impédance est appliquée, et dont une sortie fournit ladite tension de correction (RXP + ZCOP - VBIAS / RXN + ZCON - VFEED - VBIAS).

18. Circuit de synthèse d'impédance de ligne selon les revendications 6 et 17, comprenant de plus la connexion en cascade d'un filtre passe-haut (HPF) et d'un circuit de gain (RD1, RD2, RE1, RE2, SOA, RG, CG, AMPC, BUFP, BUFN), les entrées dudit filtre passe-haut (HPF) étant reliées aux bornes desdites sorties de ladite impédance de charge (ZCO) et aux sorties dudit circuit de gain (RD1, RD2, RE1, RE2, SOA, RG, CG, AMPC, BUFP, BUFN) fournissant ladite tension de réactance (ZCOP / ZCON).

19. Circuit de synthèse d'impédance de ligne selon la revendication 18, dans lequel ledit circuit de gain (RD1, RD2, RE1, RE2, SOA, RG, CG, AMPC, BUFP, BUFN) comprend, reliée aux bornes de ladite impédance de charge (ZCO) via ledit filtre passe-haut (HPF), la connexion en série d'une section d'amplificateur (RD1, RD2, RE1, RE2, SOA) et d'une résistance de gain (RG) et d'une capacité de gain (CG) dont le point de jonction fournit ladite tension de réactance (ZCOP / ZCON).

20. Circuit de synthèse d'impédance de ligne selon la revendication 19, dans lequel ledit circuit de gain (RD1, RD2, RE1, RE2, SOA, RG, CG, AMPC, BUFP, BUFN) comprend de plus un amplificateur de gain (AMPC), entre une entrée et une sortie duquel une capacité de gain (CG) est reliée.

**21.** Circuit de synthèse d'impédance de ligne selon la revendication 1, dans lequel ledit circuit de résistance (TRA / TRB) est constitué par le chemin principal d'un septième transistor à effet de champ dont l'électrode de grille est reliée à une sortie de commande de résistance d'un circuit de commande de résistance.

**22.** Circuit de synthèse d'impédance de ligne selon la revendication 21, dans lequel ledit circuit de commande de résistance comprend la connexion en série de deuxième (R1 / R4) et troisième (R2, R3) résistances entre des première (- VBIAS / - VFEED - VBIAS) et deuxième bornes de polarisation, la connexion en série d'un chemin principal d'un huitième transistor à effet de champ (FEA / FEB) et d'une quatrième résistance (R5) entre ladite première (- VBIAS / - VFEED - VBIAS) et une troisième borne de polarisation, et un amplificateur opérationnel (OA1 / OA2) dont les entrées sont reliées au point de jonction dudit chemin principal dudit huitième transistor à effet de champ (FEA / FEB) et de ladite quatrième résistance (R5), et au point de jonction desdites deuxième (R1 / R4) et troisième (R2, R3) résistances, respectivement, et dont la sortie est reliée à une électrode de grille dudit huitième transistor à effet de champ (FEA / FEB) et constitue ladite sortie de commande de résistance, une tension de polarisation étant appliquée auxdites première (- VBIAS / - VFEED - VBIAS) et deuxième bornes de polarisation, et lesdites deuxième et troisième bornes de polarisation étant polarisées à une même tension.

**23.** Circuit de synthèse d'impédance de ligne selon les revendications 2 et 22, dans lequel ledit circuit de commande de résistance comprend de plus une cinquième résistance (R4) entre ladite deuxième et une quatrième (- VFEED - VBIAS) borne de polarisation, un chemin principal d'un neuvième transistor à effet de champ (FEB) entre lesdites troisième et quatrième (- VFEED - VBIAS) bornes de polarisation, et un second amplificateur opérationnel (OA2) dont les entrées sont reliées entre lesdites deuxième et troisième bornes de polarisation et dont la sortie est reliée à une électrode de grille dudit neuvième transistor à effet de champ (FEB), une seconde tension de polarisation (VFEED) étant appliquée auxdites première (- VBIAS) et quatrième (- VFEED - VBIAS) bornes de polarisation.

**24.** Circuit de synthèse d'impédance de ligne selon la revendication 23, dans lequel ladite tension d'alimentation fournie par ladite source d'alimentation en tension auxdites première (GND) et seconde (VBAT) bornes d'alimentation est au moins égale à la somme de ladite seconde tension de polarisation (VFEED) et à deux fois une valeur de tension de polarisation (VBIAS).

**25.** Circuit de synthèse d'impédance de ligne selon les revendications 10 et 24, dans lequel lesdites deuxième (R1) et cinquième résistances (R4) ont une même valeur, ladite troisième résistance (R2, R3) est constituée par la connexion en série de deux résistances avec une même valeur et dont le point de jonction (CENTER) est relié à ladite deuxième électrode de commande (CR) dudit premier circuit de transistor (K1A / K1B) et à une entrée négative d'un circuit de sommation (SUMC), dont les première et seconde entrées positives sont respectivement reliées auxdites première et seconde bornes de ligne (AW / BW), et dont une sortie (COMMON) est reliée à ladite seconde électrode de commande (CR) de l'ensemble desdits deuxièmes circuits de transistor (K1A / K1B).

**26.** Circuit de synthèse d'impédance de ligne selon la revendication 22, dans lequel ledit circuit de commande de résistance est mis en oeuvre comme un circuit intégré sauf pour ladite quatrième résistance (R5), qui est une résistance de précision externe audit circuit intégré, et audit sixième transistor à effet de champ (TEXA, TEXB).

**27.** Circuit de synthèse d'impédance de ligne selon la revendication 3, dans lequel ladite capacité (C) présente une impédance négligeable pour des signaux de télécommunication vocaux.

FIG.1

FIG.2

FIG.3